# EUROPÄISCHE PATENTSCHRIFT

(11) **EP 1 353 819 B1**
(45) Veröffentlichungstag und Bekanntmachung des Hinweises auf die Patenterteilung: **12.03.2008**
(21) Anmeldenummer: 01273446.3
(22) Anmeldetag: 23.11.2001
(51) Int. Cl.: B60N 2/235

(54) **BESCHLAG FÜR EINEN FAHRZEUGSITZ**
HINGE FOR A VEHICLE SEAT
FERRURE POUR SIEGE DE VEHICULE

(30) Priorität: 23.01.2001 DE 10102860
(43) Veröffentlichungstag der Anmeldung: 22.10.2003
(73) Patentinhaber: KEIPER GmbH & Co. KG, 67657 Kaiserslautern (DE)
(72) Erfinder: PETERS, Christoph, 42929 Wermelskirchen (DE)
(74) Vertreter: Patentanwälte Hosenthien-Held und Dr. Held
(86) Internationale Anmeldenummer: PCT/EP2001/013641
(87) Internationale Veröffentlichungsnummer: WO 2002/058958

(56) Entgegenhaltungen:
- EP-A- 0 749 865
- EP-A- 0 773 133
- EP-A- 0 967 110
- EP-A- 0 967 111
- WO-A-00/76374

## Beschreibung

Die Erfindung betrifft einen Beschlag für einen Fahrzeugsitz, insbesondere einen Rastbeschlag für einen Kraftfahrzeugsitz, mit den Merkmalen des Oberbegriffs des Anspruches 1.

Aus der WO 00/44582 A1 ist ein Rastbeschlag mit Riegeln und einer Führung hierfür bekannt. Wenn die Führung und die Riegel nicht toleranzgenau hergestellt sind, besteht die Gefahr, dass im Falle einer starken Belastung in Drehrichtung, beispielsweise bei einem Crash, bei welchem über die Rückenlehne ein Drehmoment auf das mit ihr verbundene Beschlagteil wirkt, die Riegel in der Führung kippen und infolge dessen die Zahnüberdeckung zwischen Riegel und Beschlagteil verringert wird.

In der EP 0 749 865 A2 ist ein Beschlag der eingangs genannten Art beschrieben. Die beiden Beschlagteile sind auf einem zentralen Bolzen gelagert. Der Exzenter weist wenigstens einen ersten Nocken, der zum Spannen des zugeordneten Riegels dient, und wenigstens einen zweiten Nocken auf, welcher zur Abstützung des Riegels beim Kippen dient.

Der Erfindung liegt die Aufgabe zu Grunde, einen Beschlag der eingangs genannten Art für höhere Lastanforderungen kostengünstig zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Indem der Exzenter mittels seiner beiden Exzenternocken über zwei von einander beabstandete Stellen auf den Riegel einwirkt, kann der Riegel sich bei Aufnahme einer in Umfangsrichtung wirkenden Last, die er bei einer Belastung des Beschlagoberteils erfährt, besser auf dem Exzenter abstützen, d.h. einem möglichen Kippen in der Führung eine Sperrkraft mit größerem Hebelarm entgegensetzen. Dies erhält die Zahnüberdeckung und sichert damit den verriegelten Zustand. Somit ist eine beträchtliche Laststeigerung möglich. Da Zahnsegmente weniger kippen können, ergibt sich zugleich ein verbessertes Spielverhalten.

Die zwei am Exzenter vorgesehenen Exzenternocken und die zwei am Riegel vorgesehenen Sperrnocken sind jeweils ungefähr im Abstand der quer zur Führung gemessenen Breite des Riegels zueinander angeordnet. Außer der verbesserten Abstützung hat dies den Vorteil, dass sich der Betätigungsweg reduziert, da der Riegel günstiger ansteuerbar ist. Durch die Anordnung von Sperrnocken und Exzenter ist stets gewährleistet, dass ein Kräftegleichgewicht auch unter Fertigungstoleranzen entstehen kann. Die Anlage zwischen Sperrnocken und Exzenter erfolgt innerhalb des Selbsthemmungsbereichs, um eine Drehmomentenübertragung auf den Exzenter zu verhindern. Bei den zwei Riegeln wird die Last hauptsächlich über jeweils einen Sperrnocken diagonal durch den Exzenter geleitet, so dass trotz theoretisch vierfacher Abstützung die statische Bestimmtheit erhalten bleibt.

Das durch die Doppelabstützung bereits reduzierte Spiel wird vorzugsweise dadurch weiter reduziert, dass die Exzenternocken Spannflächen mit unterschiedlichen mittleren Abständen zum Zentrum des Exzenters aufweisen. Eine damit bewirkte Kippbewegung der Riegel, welche toleranzbedingt in den Führungen beweglich sind, gleicht das freie Spiel aus. Eine geeignete Auslegung sichert ein geringes Spiel und hohe Festigkeiten des Beschlags.

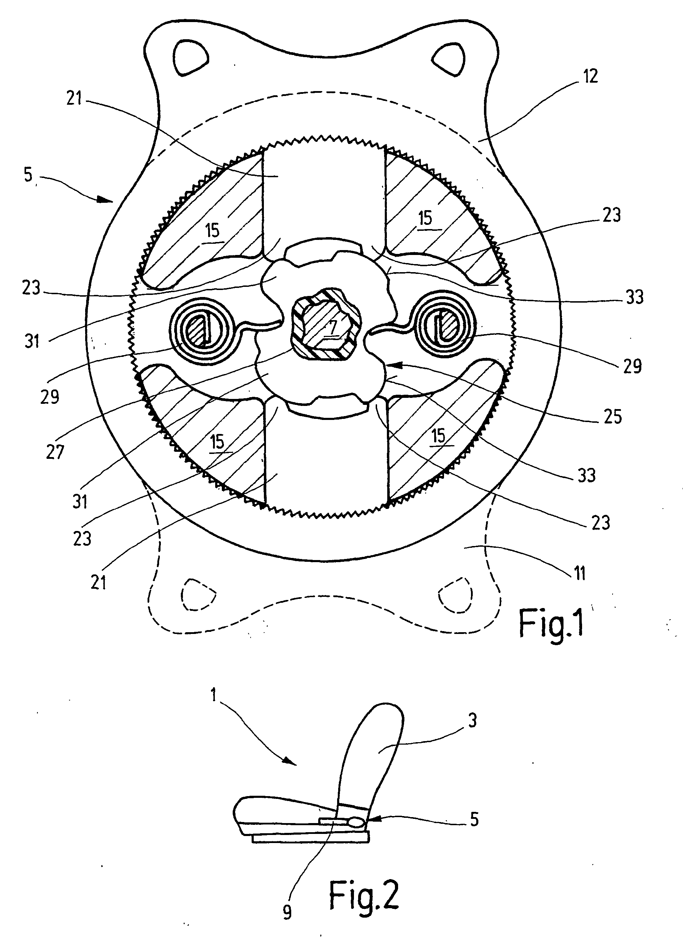

Im folgenden ist die Erfindung anhand zweier in der Zeichnung dargestellten Ausführungsbeispiele näher erläutert. Es zeigen
- Fig. 1: einen Schnitt durch das erste Ausführungsbeispiel,
- Fig. 2: einen mit dem ersten Ausführungsbeispiel versehenen Fahrzeugsitz,

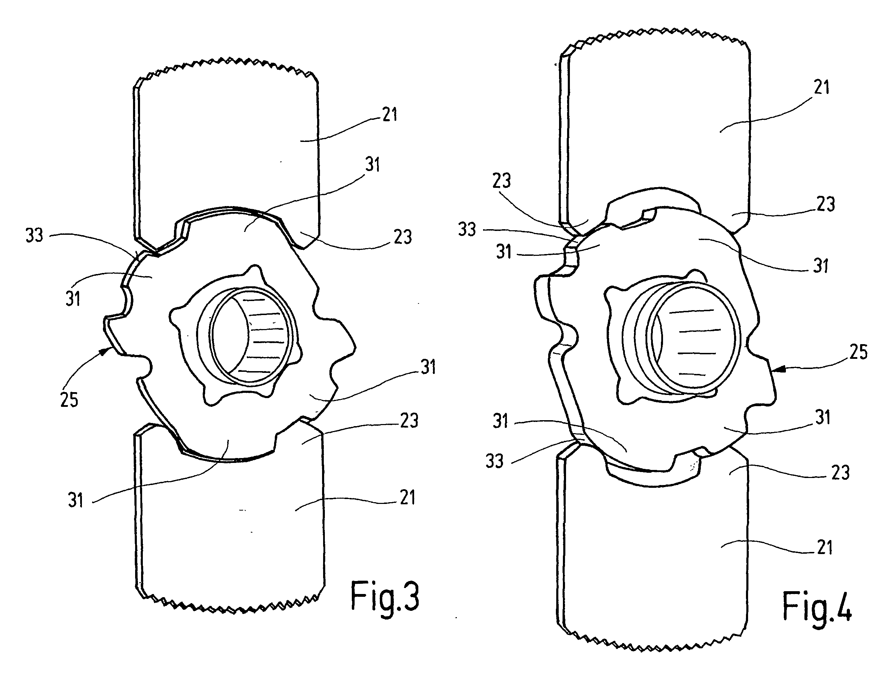

- Fig. 3: eine Teilansicht des ersten Ausführungsbeispiels im entriegelten Zustand,
- Fig. 4: eine Teilansicht des ersten Ausführungsbeispiels im verriegelten Zustand, und

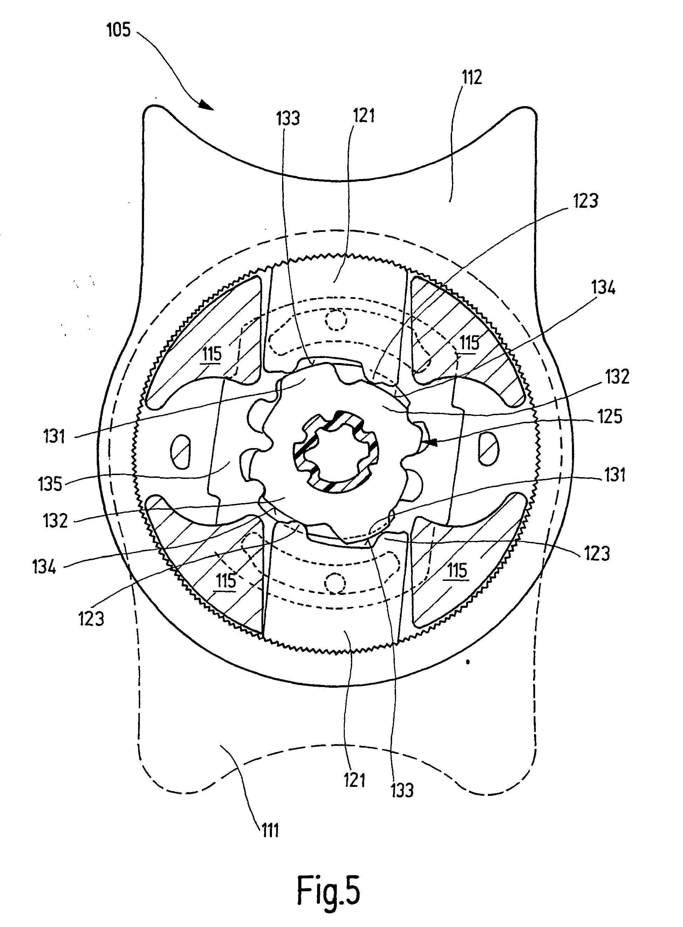

- Fig. 5: einen Schnitt durch das zweite Ausführungsbeispiel.

Im ersten Ausführungsbeispiel weist ein Fahrzeugsitz 1 eines Kraftfahrzeuges für die Neigungseinstellung seiner Rückenlehne 3 auf seinen beiden Seiten je einen Beschlag 5 auf, der als Rastbeschlag ausgebildet ist. Die beiden Beschläge 5 stehen mittels einer Übertragungsstange 7 miteinander in Getriebeverbindung. Ein drehfest auf der Übertragungsstange 7 sitzender Handhebel 9 dient der manuellen Betätigung der Beschläge 5. Die nachfolgenden Richtungsangaben beziehen sich auf das durch die Übertragungsstange 7 definierte Zylinderkoordinatensystem.

Jeder Beschlag 5 weist als erstes Beschlagteil ein Beschlagunterteil 11 und als zweites Beschlagteil ein Beschlagoberteil 12 auf, welche durch nicht näher dargestellte Haltebleche in axialer Richtung zusammen gehalten werden. Das sitzteilfeste Beschlagunterteil 11 ist mit vier Führungs- und Lagersegmenten 15 versehen, welche radial außen eine zylindrisch geformte, viermal unterbrochene Lagerfläche für eine entsprechend gekrümmte, radial nach innen weisende Lagerfläche des als Hohlrad ausgebildeten lehnenfesten Beschlagoberteils 12 bilden. Je zwei Führungs- und Lagersegmente 15 bilden zusammen eine radial verlaufende Führung für ein radial beweglich angeordnetes Zahnsegment 21.

Jedes Zahnsegment 21 trägt als Riegel auf einer konvex gekrümmten, radial weiter außen gelegenen Seite eine Vielzahl von Zähnen, welche mit entsprechenden Zähnen des Beschlagoberteils 12 auf dessen Lagerfläche zusammenwirken können, um den Beschlag 5 zu verriegeln. Die beiden parallel zur radialen Richtung verlaufenden Seiten dienen der Führung durch die zugehörigen zwei Führungs- und Lagersegmente 15. Die überwiegend konkav gekrümmte, radial weiter innen gelegene Seite des Zahnsegments 21 trägt zwei konvexe Sperrnocken 23, welche zueinander den größtmöglichen Abstand auf dieser Seite des Zahnsegment 21 einnehmen, also sich jeweils an der Ecke zu einer der beiden parallel zur radialen Richtung verlaufenden Seiten angeordnet sind.

Um die beiden Zahnsegmente 21 nach außen zu drücken, ist eine Exzenterscheibe 25 vorgesehen, welche mittels eines buchsenförmigen Übertragungselementes 27 drehfest auf der Übertragungsstange 7 sitzt und welche durch zwei Spiralfedern 29 vorgespannt ist. Am Außenumfang der Exzenterscheibe 25 sind vier radial nach außen vorspringende Exzenternocken 31 mit je einer Spannfläche 33 vorgesehen, welche bezüglich der Übertragungsstange 7 exzentrisch gekrümmt ist. In Umfangsrichtung zwischen den Exzenternocken 31 springt die Exzenterscheibe 25 soweit radial nach innen zurück, daß die Sperrnocken 23 Aufnahme finden können. Eine der Übersichtlichkeit halber nicht dargestellte Mitnehmerscheibe, welche auch mittels des Übertragungselementes 27 drehfest auf der Übertragungsstange 7 sitzt und welche auf an sich bekannte Weise über Schlitz-Zapfen-Führungen mit den beiden Zahnsegmenten 21 zusammenwirkt, dient der Rückholung der Zahnsegmente 21 in radialer Richtung nach innen, also der Entriegelung, welche durch eine Drehung der Übertragungsstange 7 mittels des Handhebels 9 eingeleitet wird.

Ausgehend von einem entriegelten Zustand, in welchem sich die beiden Zahnsegmente 21 radial innen befinden, wird durch die Vorspannung der Spiralfedern 29 die Exzenterscheibe 25 so gedreht, daß die Exzenternocken 31 zunächst in Anlage an die Sperrnocken 23 gelangen. Aufgrund des radial kontinuierlich wachsenden Abstandes der Spannflächen 33 zum Zentrum der Exzenterscheibe 25, also zur Übertragungsstange 7, drücken bei der weiteren Drehung die Exzenternocken 31 über die Sperrnocken 23 die Zahnsegmente 21 nach außen. Sobald die Zahnsegmente 21 in Eingriff mit dem Beschlagoberteil 12 gelangen, ist der jeweilige Beschlag 5 verriegelt. Dabei liegt der Winkel zwischen jeder Spannfläche 31 und der zugehörigen Anlagefläche des Sperrnockens 23 im Selbsthemmungsbereich.

Wird im verriegelten Zustand das Beschlagoberteil 12 mit einem Drehmoment belastet, beispielsweise im Crashfall, können über die ineinander greifenden Zähne die Zahnsegmente 21 aufgrund von Toleranzen in ihren Führungenkippen. Dem Kippen wird eine Sperrkraft aufgrund der randseitigen Abstützung der Sperrnocken 23 auf der Exzenterscheibe 25 entgegengesetzt, und zwar mit einem im Vergleich zu einer mittigen Abstützung großen Hebelarm. Dies schränkt das Kippen stark ein, so daß im Crashfall die Gefahr einer Reduktion der Zahnüberdeckung, welche zu einer geringeren Lastaufnahme des Beschlags 5 führt, weil dann nur noch wenige Zähne tragen, verringert wird oder eine solche Reduktion der Zahnüberdeckung erst zu einem sehr viel späteren Zeitpunkt eintritt. Durch Belastungen in und gegen Fahrtrichtung werden hauptsächlich die Sperrnocken 23 auf der entsprechenden Seite belastet und die anderen entlastet. Dadurch wird die Last diagonal durch die Exzenterscheibe 25 geleitet, wodurch eine statische Bestimmtheit erhalten bleibt.

Das zweite Ausführungsbeispiel gleicht weitgehend dem ersten Ausführungsbeispiel, weshalb gleiche und gleichwirkende Bauteile um 100 höhere Bezugszeichen tragen. Der Beschlag 105 gemäß dem zweiten Ausführungsbeispiel umfaßt ebenfalls ein Beschlagunterteil 111 mit vier Führungs- und Lagersegmenten 115, auf welchen ein Beschlagoberteil 112 drehbar gelagert ist und welche zugleich als Führung für zwei radial entgegengesetzt bewegliche Zahnsegmente 121 dienen. Die Zahnsegmente 121 weisen auf ihrer radial nach innen weisenden Seite je zwei Sperrnocken 123 auf.

Ein zentral angeordneter, wie im ersten Ausführungsbeispiel federbelasteter Exzenter 125 drückt beide Zahnsegmente 121 über je einen in Belastungsrichtung nacheilenden, ersten Exzenternocken 131 und je einen in Belastungsrichtung voreilenden, zweiten Exzenternocken 132 radial nach außen, wo die Zahnsegmente 121 mit einem Zahnkranz (Innenverzahnung) des Beschlagoberteils 112 zusammenwirken, um den Beschlag 105 zu verriegeln. Die insgesamt vier Exzenternocken 131 und 132 sind nicht exakt kreisbogenförmig um die Drehachse des Exzenters 125 gekrümmt, sondern weisen jeweils eine erste Spannfläche 133 bzw. zweite Spannfläche 134 mit wachsendem Radius, also mit einer exzentrischen Krümmung, auf. Bezüglich des Zentrums des Exzenters 125, d.h. der zentralen Achse der nicht dargestellten Übertragungsstange, weist jede erste Spannfläche 133 des ersten Exzenternockens 131 einen größeren mittleren Abstand (größeren mittleren Radius) auf als jede zweite Spannfläche 134 des zweiten Exzenternockens 132. Eine in der Zeichnung nur im Hintergrund dargestellte, mit dem Exzenter 125 drehfest verbundene Mitnehmerscheibe 135 dient wie im ersten Ausführungsbeispiel der Rückholung der Zahnsegmente 121 in an sich bekannter Weise mittels einer Schlitz-Zapfen-Führung.

Toleranzbedingt ist zwischen den Führungs- und Lagersegmenten 115 und den Zahnsegmenten 121 im Hundertstel-Millimeter-Bereich ein Spiel vorhanden, welches zu einem "freien Spiel" an der Lehnenoberkante führen würde. Der etwa im Zehntel-Millimeter-Bereich liegende Unterschied der mittleren Radien der Exzenternocken 131 und 132 sorgt dafür, daß die Zahnsegmente 121 vom Exzenter 125 in eine gekippte Position gezwungen und dort gehalten werden. Die gekippte Position ist in der Zeichnung unmäßstäblich dargestellt, wobei die Kippbewegung der Zahnsegmente 121 bis zur beidseitigen Anlage an die Führungs- und Lagersegmente 115 erfolgt. Das durch die Doppelabstützung bereits reduzierte "freie Spiel" wird dadurch ausgeglichen. Der Zahneingriff zwischen den Zahnsegmenten 121 und dem Zahnkranz des Beschlagoberteils 112 wird nicht beeinträchtigt.

Toleranzbedingt kommt es in den meisten Fällen schon zu einem Ende der Kippbewegung, bevor beide Sperrnocken 123 an beiden Exzenternocken 131 und 132 anliegen. Der Abstand des Exzenters 125 zum Zahnsegment 121 ist so klein, daß aufgrund der hohen statischen Festigkeit der Doppelabstützung weiterhin sehr hohe Festigkeiten erzielt werden.

Für die statische Bestimmtheit des Systems ist es von Vorteil, wenn beide Stützstellen zwischen Exzenter 125 und Zahnsegment 121 nur bei hohen Lasten zum Targen kommen, und ansonsten nur jeweils eine Stützstelle vorhanden ist.

## Patentansprüche

1. Beschlag für einen Fahrzeugsitz, insbesondere Rastbeschlag für einen Kraftfahrzeugsitz,
a) mit einem ersten Beschlagteil (11; 111),
b) mit einem relativ zum ersten Beschlagteil (11; 111) verdrehbaren und verriegelbaren zweiten Beschlagteil (12; 112),
c) mit wenigstens einem Riegel (21; 121), der in einer Führung (15; 115) des ersten Beschlagteils (11; 111) in radialer Richtung beweglich angeordnet ist und zum Verriegeln auf seiner radial außen gelegenen Seite mit dem zweiten Beschlagteil (12; 112) zusammenwirkt, wobei der Riegel (21; 12) bei einer Belastung des zweiten Beschlagteils (12; 112) in der Führung (15; 115) kippt, und
d) mit einem Exzenter (25; 125), der relativ zu den Beschlagteilen (11, 12; 111, 112) drehbar ist und der auf den Riegel (21; 121) auf dessen radial innen gelegener Seite einwirkt, um diesen radial nach außen zu bewegen, wobei der Exzenter (25; 125) für jeden vorhandenen Riegel (21; 121) zwei Exzenternocken (31; 131, 132) aufweist und über zwei von einander beabstandete Stellen (23, 31; 123, 131, 132) auf den Riegel (21; 121) einwirkt,
**dadurch gekennzeichnet,**
e) **dass** zwei diagonal gegenüberliegende und radial entgegengesetzt bewegliche Riegel (21; 121) vorgesehen sind,
f) **dass** das erste Beschlagteil (11; 111) mit vier Führungs- und Lagersegmenten (15; 115) versehen ist, auf welchen das zweite Beschlagteil (12; 112) drehbar gelagert ist und welche zugleich als die Führung (15; 115) für die beiden Riegel (21; 121) dienen,
g) **dass** die Exzenternocken (31; 131, 132) zueinander einen Abstand von ungefähr einer Breite des Riegels (21; 121) haben,
h) **dass** jeder Riegel (21; 121) im Bereich der beiden Ränder seiner radial innen gelegenen Seite je einen Sperrnocken (23; 123) aufweist, um die Einwirkung des Exzenters (25; 125) aufzunehmen und sich auf diesem abzustützen, wobei bei Anlage der Exzenternocken (31; 131, 132) an die Sperrnocken (23; 123) die Winkel zwischen den anliegenden Flächen innerhalb des Selbsthemmungsbereichs liegen, und
i) **dass** bei einer Belastung des zweiten Beschlagteils (12; 112) dem Kippen der beiden Riegel (21; 121) eine Sperrkraft aufgrund der randseitigen Abstützung der Sperrnocken (23; 123) auf dem Exzenter (25; 125) entgegengesetzt wird, wobei die beiden Riegel (21; 121) sich jeweils überwiegend über den in Belastungsrichtung voreilenden Sperrnocken (23; 123) auf dem Exzenter (25; 125) abstützen und die von ihnen aufgenommene Last diagonal durch den Exzenter (25; 125) leiten.

2. Beschlag nach Anspruch 1, **dadurch gekennzeichnet, dass** jeder Exzenternocken (31; 131, 132) eine exzentrisch gekrümmte Spannfläche (33; 133, 134) aufweist, mit welcher er auf den Riegel (21; 121) einwirkt.

3. Beschlag nach Anspruch 2, **dadurch gekennzeichnet, dass** bei den zwei für einen Riegel (121) vorgesehenen Exzenternocken (131, 132) eine erste Spannfläche (133) eines ersten Exzenternockens (131) einen größeren mittleren Abstand zum Zentrum des Exzenters (125) aufweist als eine zweite Spannfläche (134) des anderen, zweiten Exzenternockens (132).

4. Fahrzeugsitz (1) mit einer Rückenlehne (3), **gekennzeichnet durch** einen Beschlag (5; 105) nach einem der vorhergehenden Ansprüche zur Neigungseinstellung der Rückenlehne (3).

## Claims

1. A fitting for a vehicle seat, in particular a latching fitting for a motor vehicle seat,
a) having a first fitting part (11; 111),
b) having a second fitting part (12; 112), which is rotatable relative to the first fitting part (11; 111) and is lockable,
c) having at least one latch (21; 121), which is arranged in a manner such that it is movable in the radial direction in a guide (15; 115) of the first fitting part (11; 111) and, for locking purposes, interacts on its radially outwardly positioned side with the second fitting part (12; 112), wherein, when the second fitting part (12; 112) is loaded, the latch (21; 12) tilts in the guide (15; 115), and
d) having an eccentric (25; 125), which is rotatable relative to the fitting parts (11, 12; 111, 112) and acts on the latch (21; 121) on the radially inwardly positioned side thereof, in order to move said latch radially outward, wherein the eccentric (25; 125) has, for each latch (21; 121) which is present, two eccentric cams (31; 131, 132) and acts on the latch (21; 121) via two spaced-apart points (23, 31; 123, 131, 132),
**characterised in that**
e) two diagonally opposite latches (21; 121) that can move in radially opposite directions are provided,
f) the first fitting part (11; 111) is provided with four guide and bearing segments (15; 115) on which the second fitting part (12; 112) is rotatably mounted and which serve at the same time as the guide (15; 115) for the two latches (21; 121),
g) the eccentric cams (31; 131, 132) are at a distance from each other of approximately the width of the latch (21; 121),
h) each latch (21; 121) has a respective blocking cam (23; 123) in the region of the two edges of its radially inwardly positioned side, in order to receive the action of the eccentric (25; 125) and to be supported thereon, wherein when the eccentric cams (31; 131, 132) bear against the blocking cams (23; 123), the angles between the adjacent surfaces lie within the self-locking range, and
i) when the second fitting part (12; 112) is loaded, the tilting of the two latches (21; 121) is opposed by a blocking force, on account of the blocking cams (23; 123) being supported at their edge on the eccentric (25; 125), wherein the two latches (21; 121) are each supported on the eccentric (25; 125) predominantly via the blocking cam (23; 123) that is ahead in the loading direction, and conduct the load received by them diagonally through the eccentric (25; 125).

2. A fitting according to claim 1, **characterised in that** each eccentric cam (31; 131, 132) has an eccentrically curved clamping surface (33; 133, 134) with which it acts on the latch (21; 121).

3. A fitting according to claim 2, **characterised in that** in the case of the two eccentric cams (131, 132) provided for a latch (121), a first clamping surface (133) of a first eccentric cam (131) is at a greater average distance from the centre of the eccentric (125) than a second clamping surface (134) of the other, second eccentric cam (132).

4. A vehicle seat (1) having a backrest (3), **characterised by** a fitting (5; 105) according to any one of the preceding claims for adjustment of the inclination of the backrest (3).

## Revendications

1. - Armature pour un siège de véhicule, en particulier armature à encliquetage pour un siège de véhicule automobile,
a) avec une première partie d'armature (11 ; 111) ;
b) avec une deuxième partie d'armature (12 ; 112) apte à tourner et à être verrouillée par rapport à la première partie d'armature (11 ; 111) ;
c) avec au moins un verrou (21 ; 121), qui est disposé mobile en direction radiale dans un guidage (15 ; 115) de la première partie d'armature (11 ; 111) et coopère avec la deuxième partie d'armature (12 ; 112) pour le verrouillage sur son côté situé radialement vers l'extérieur, le verrou (21 ; 12) basculant lors d'une charge de la deuxième partie d'armature (12 ; 112) dans le guidage (15 ; 115) ; et
d) avec un excentrique (25 ; 125), qui est apte à tourner par rapport aux parties d'armature (11, 12 ; 111, 112) et qui agit sur le verrou (21 ; 121) sur son côté situé radialement vers l'intérieur, pour déplacer celui-ci radialement vers l'extérieur, l'excentrique (25 ; 125) présentant pour chaque verrou présent (21 ; 121) deux cames d'excentrique (31 ; 131 ; 132) et agissant sur le verrou (21 ; 121) en passant par deux positions éloignées l'une de l'autre (23, 31 ; 123, 131, 132),
**caractérisée par le fait**
e) **que** sont prévus deux verrous (21 ; 121) se faisant face diagonalement et mobiles de façon opposée ;
f) **que** la première partie d'armature (11 ; 111) est dotée de quatre segments de guidage et de palier (15 ; 115) sur lesquels la deuxième partie d'armature (12 ; 112) est montée à rotation et qui servent en même temps de guidage (15 ; 115) pour les deux verrous (21 ; 121) ;
g) **que** les cames d'excentrique (31 ; 131, 132) ont l'une par rapport à l'autre une distance d'environ une largeur du verrou (21 ; 121) ;
h) **que** chaque verrou (21 ; 121) présente dans la région des deux bords de son côté situé radialement vers l'intérieur respectivement une came d'arrêt (23 ; 123) pour recevoir l'action de l'excentrique (25 ; 125) et s'appuyer sur celui-ci, à l'occasion de quoi, lors de l'appui des cames d'excentrique (31 ; 131, 132) sur les cames d'arrêt (23 ; 123), les angles entre les surfaces d'appui se situent à l'intérieur de la région de blocage automatique, et
i) **que**, lors d'une charge de la deuxième partie d'armature (12 ; 112), au basculement des deux verrous (21 ; 121) est opposée une force d'arrêt en raison de l'appui du côté du bord des cames d'arrêt (23 ; 123) sur l'excentrique (25 ; 125), à l'occasion de quoi les deux verrous (21 ; 121) s'appuient chacun de façon prépondérante par les cames d'arrêt (23 ; 123) avançant dans la direction de la charge, sur l'excentrique (25 ; 125), et guident la charge reçue par celles-ci diagonalement par l'excentrique (25 ; 125).

2. - Armature selon la revendication 1, **caractérisée par le fait que** chaque came d'excentrique (31 ; 131, 132) présente une surface de serrage (33 ; 133, 134) excentriquement cintrée, avec laquelle elle agit sur le verrou (21 ; 121).

3. - Armature selon la revendication 2, **caractérisée par le fait que**, dans le cas des deux cames d'excentrique (131, 132) prévues pour un verrou (121), une première surface de serrage (133) d'une première came d'excentrique (131) présente par rapport au centre de l'excentrique (125) une distance moyenne plus grande qu'une deuxième surface de serrage (134) de l'autre, deuxième, came d'excentrique (132).

4. - Siège de véhicule (1) présentant un dossier (3), **caractérisé par** une armature (5 ; 105) telle que définie à l'une des revendications précédentes pour le réglage de l'inclinaison du dossier (3).
